# EUROPEAN PATENT APPLICATION

(11) **EP 4 492 750 A1**
(43) Date of publication of application: **15.01.2025**
(21) Application number: 23185411.8
(22) Date of filing: 13.07.2023
(51) Int. Cl.: H04L 45/24, H04L 47/34

(54) **PROCESSING FRAMES IN COMMUNICATIONS NETWORK**

(71) Applicant: TTTech Flexibilis Oy, 33100 Tampere (FI)
(72) Inventor: Kujala, Jouni, 33100 Tampere (FI)
(74) Representative: Kolster Oy Ab

(57) **Abstract**

Processing frames in a communications network is presented. An apparatus is configured to receive frames and relay the frames further. Frames are received (500) of a stream from more than one route, each frame comprising a sequence number. A sequence number of received one or more frames is detected (502) to be smaller than the sequence number of a frame receiver earlier. The frame that was received earlier with a greater sequence number is (504) in a transmission queue maintained by the apparatus and not yet been relayed further. The one or more frames are inserted (506) in a transmission queue causing the relaying of the one or more frames before the relaying of the earlier frame that was received previously with a greater sequence number.

## Description

### FIELD

The embodiments relate to processing frames in a node of a communications network where redundancy is utilised and more particularly restoring correct order of frames.

### BACKGROUND

The following description of background art may include insights, discoveries, understandings or disclosures, or associations together with disclosures not known to the relevant art prior to the present invention but provided by the invention. Some such contributions of the invention may be specifically pointed out below, whereas other such contributions of the invention will be apparent from their context.

Several communications protocols provide redundant communications using duplicate messages thereby ensuring that the message is received by the destination. For example, IEC 62439-3 Edition 2 defines two redundancy protocols: Parallel Redundancy Protocol (PRP) and High-availability Seamless Redundancy (HSR) protocol.

Many protocols utilizing redundancy define that a source address together with a sequence number shall be used for detecting duplicates. For example, both HSR and PRP include both a source Medium Access Control (MAC) address and a 16 bit sequence number in every frame that is sent. The HSR/PRP source node adds the sequence numbers to the frames. A sequence number is source MAC address specific, i.e. every source has its own running sequence number that is incremented by one for every frame sent to the HSR/PRP network. The HSR/PRP node sends the same data duplicated via two paths with the same sequence number.

When the two paths do not have faults, the duplicate frames are received via both paths at a destination or relaying node. However, if a fault occurs frames may arrive at the node in the wrong order, for example due to different path lengths.

The wrong order of frames is an indication that some frame experienced more delay than another frame. Further, latency is increased in communication.

### SUMMARY

According to an aspect, there is provided an apparatus configured to receive frames and relay the frames further, the apparatus comprising: means for receiving frames of a stream from more than one route, each frame comprising a sequence number; means for detecting that a sequence number of received one or more frames is smaller than the sequence number of a frame receiver earlier; means for determining that the frame that was received earlier with a greater sequence number is in a transmission queue maintained by the apparatus and not yet been relayed further and means for inserting the one or more frames in a transmission queue causing the relaying of the one or more frames before the relaying of frame that was received earlier with a greater sequence number.

According to an aspect, there is provided a method for an apparatus configured to receive frames and relay the frames further, the method comprising: receiving frames of a stream from more than one route, each frame comprising a sequence number; detecting that a sequence number of received one or more frames is smaller than the sequence number of a frame receiver earlier; determining that the frame that was received earlier with a greater sequence number is in a transmission queue maintained by the apparatus and not yet been relayed further; inserting the one or more frames in a transmission queue causing the relaying of the one or more frames before the relaying of the frame that was received earlier with a greater sequence number.

Some embodiments of the invention are disclosed in the dependent claims.

In an embodiment, the one or more frames are placed in front of the frame that was received earlier with a greater sequence number in the same transmission queue.

In an embodiment, the one or more frames are placed in a transmission queue having a higher priority than the transmission queue with the frame that was received earlier with a greater sequence number.

In an embodiment, the one or more frames are marked a higher priority than the frame that was received earlier with a greater sequence number.

In an embodiment, the sequence number is a redundancy protocol sequence number.

The embodiments have many advantages. The solution reduces the maximum latency frames of data streams, especially real-time streams experience in redundant networks. Further additional buffering is avoided. The embodiments may be realised utilising existing buffers in the communication nodes.

### BRIEF DESCRIPTION OF DRAWINGS

In the following the invention will be described in greater detail by means of preferred embodiments with reference to the accompanying drawings, in which
Figure 1 illustrates a simplified example of a communication network,
Figure 2 illustrates an example of a network,
Figure 3A illustrates an example of a frame used in PRP,
Figure 3B illustrates an example of a frame used in FRER,
Figures 4A to 4E illustrate a situation where a frame gets lost,
Figure 5 is a flowchart illustrating an embodiment,
Figure 6 illustrates an embodiment,
Figure 7 illustrates an example of transmission queues in a node,
Figure 8 and 9 illustrates examples of the situation after the frames have been put in correct order, and
Figure 10 illustrates an example of an apparatus.

### DETAILED DESCRIPTION

The following embodiments are exemplary. Although the specification may refer to "an", "one", or "some" embodiment(s) in several locations, this does not necessarily mean that each such reference is to the same embodiment(s), or that the feature only applies to a single embodiment. Single features of different embodiments may also be combined to provide other embodiments.

In communication networks, it is important that a receiver can receive messages sent to it by a transmitter. In some networks, to guarantee reception of messages even when there is a network failure, redundancy is used. Network redundance means that messages or part of messages are transmitted using more than one pathway. For example, in a typical communication system comprising a large number of network nodes connected to each other, messages between the nodes may be transmitted utilising frames, and identical copies of the frames are transmitted using more than one path, each path comprising a set of nodes between the transmitting node and the receiving node. Thus, if one pathway is corrupted, frames arrive at the destination through some other path.

Various protocols have been designed to provide redundancy in communication networks. A non-limiting example of a communication network is an Ethernet network. Examples of protocols are already mentioned Parallel Redundancy Protocol (PRP) and High-availability Seamless Redundancy (HSR) protocol, and IEEE standard 802.1CB (Frame Replication and Elimination for Reliability, FRER).

In communication networks, especially in real-time communications, network latency is critical. Generally, there are some known methods that are used for minimizing network latency. For example, small transfer units are used. In packet-based networks this means using small packet size. In cut-through, transmission of transfer unit is started before it has been received completely. Link speed may be increased. This both decreases link utilization and makes transfer units (packets) shorter in time, who both decrease queuing and link delays. In prioritization, multiple transmit queues may be used and the real-time packets may be transmitted first. In pre-emption, transmission of a low priority frame is interrupted when there is a high priority frame available to be transmitted.

In real-time communication the maximum latency is typically what matters, not the latency of the fastest packets, and not the average latency. In many applications data that arrives early cannot be used before also the slower packets that were sent earlier have arrived. In many applications the packets, that are slower than a certain limit, are as bad for the functionality as packets totally lost.

A typical solution for minimizing latency typically decreases latency for all packets, or for all packets of the specific stream(s). These methods are not able to provide smaller latency for those packets that need it more, which leads to inefficient resource usage. This is due to inability to recognize the packets that arrive later than others.

Consider, as an example, an Ethernet network. Traditionally in Ethernet network frames of a stream should not go into a wrong order. However, in Ethernet networks utilising redundancy, with these relatively new redundancy protocols HSR, PRP and FRER, for example, it is possible. This can be challenging for the receiver(s) of the stream as the higher protocol layers receive the frames in a wrong order, and they are not typically optimized for that kind of behaviour.

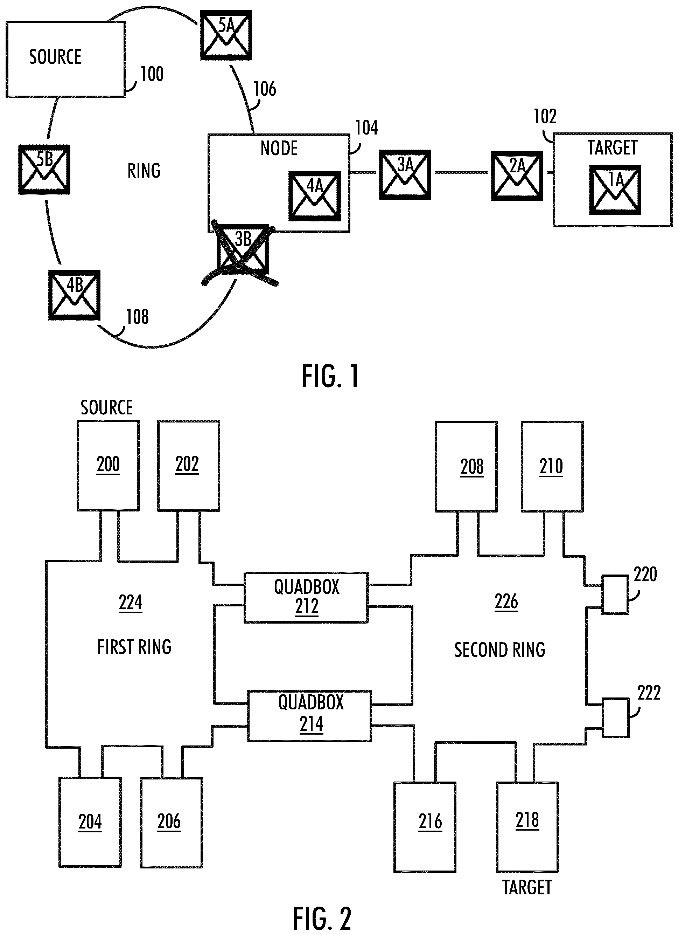

Figure 1 illustrates a simplified example of a communication network, such as an Ethernet network. The figure illustrates a situation where a source device 100 transmits frames to a target device 102 via a node 104. In a more realistic situation, there may be several nodes between the source and target devices, but for simplicity the number of nodes in Figure 1 (and other figures) has been kept small.

In the example network of Figure 1, redundancy is utilised. Redundancy protocols, such as HSR, PRP and FRER have the same basic principle: The source duplicates frames to be transmitted by creating one or more similar copies of them and sending the duplicates using different paths via the network to their destination. The final destination of the frames, or some node on the path before it removes the extra duplicates so that the higher layers of the receiver receive only one copy of each frame. It is also possible that a relaying node duplicates the frames it has received and transmits the duplicates using more than one path. These duplicate paths may be denoted as rings. In practical networks, a connection between a source device and a target device may comprise several rings.

Figure 2 illustrates an example of a network, with a set of nodes 200 - 222. The source device 200 transmits frames to a target device 218. In the example of Figure 2, redundancy is utilised and the network forms two rings 224, 226 on the path from the source device 200 to the target device 218.

A redundancy protocol adds a header or trailer to each frame to be transmitted. The header or trailer contains a sequence number that makes it possible for the node responsible for removing duplicates to recognize the duplicates, as the duplicates share the same sequence number.

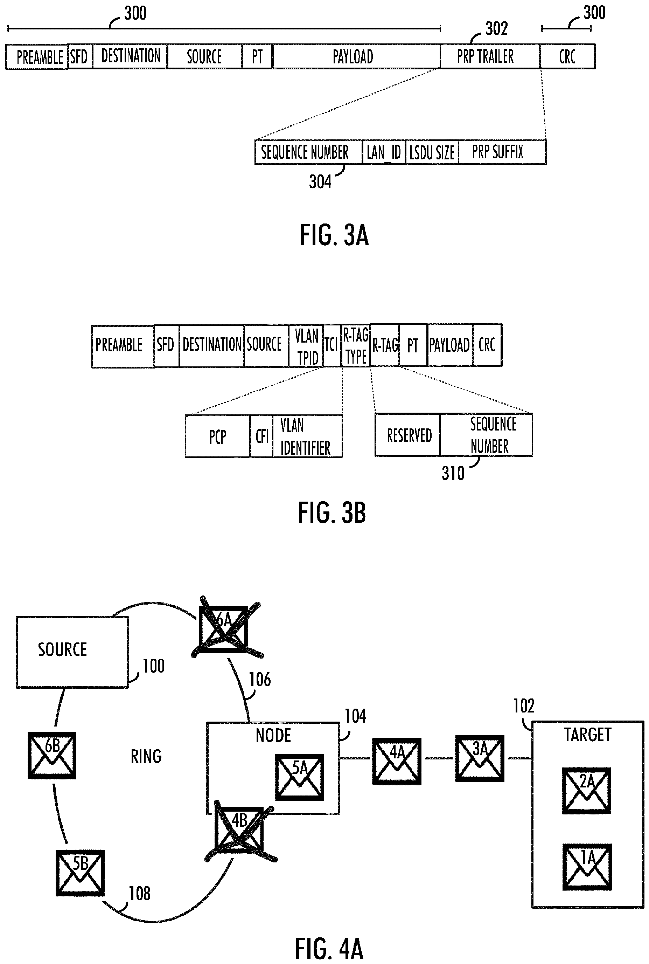

Figure 3A illustrates an example of a frame used in PRP protocol. The frame comprises original Ethernet frame 300 and PRP redundancy trailer 302. The trailer comprises a field 304 for a sequence number.

Figure 3B illustrates an example of a frame used in FRER protocol. The frame comprises a field 310 for a sequence number.

Returning to Figure 1, the source device 100 transmits frames to a destination device 102 via a node 104. The source node utilises redundancy and transmit copies of the frames via two different paths 106, 108. The path 108 is longer than 106. Both paths may comprise relaying nodes, but they are not shown for simplicity. Frames transmitted via the shorter path 106 are marked with "A" and frames transmitted via the longer path 108 are marked with "B".

In the situation of Figure 1, a frame 1A has already reached the destination device and frames 2A and 3A are on their way from node 104 to the destination device. The node 104 has received frame 4A via the shorter path 106. The node 104 receives a frame 3B via the longer path 108. However, as the node 104 is aware that the corresponding frame 3A has already been received earlier it deletes the duplicate frame.

Figure 1 illustrates a normal situation where no problems occur.

Figures 4A to 4E illustrate a situation where a frame gets lost. On each path, the frames that belong to a certain stream stay in the order they were sent, because in Ethernet networks it is not allowed to reorder frames of a stream. However, when frames are lost on the fastest path the copies travelling a slower path will replace the lost ones, and the frames may go into wrong order.

In Figure 4A the frame 5A has arrived at the node 104. From the longer path 108, frame 4B arrives at the node 104, but as a copy 4A of the frame has already received from the shorter path 106, node 104 is configured to delete it. The frame 6A is lost on its path 106 from the source device 100 to node 104. The frame loss can be for example due to bit error on the line, in which case the frame is not accepted at the node 104 due to erroneous check sum. The following figures show the effect this causes.

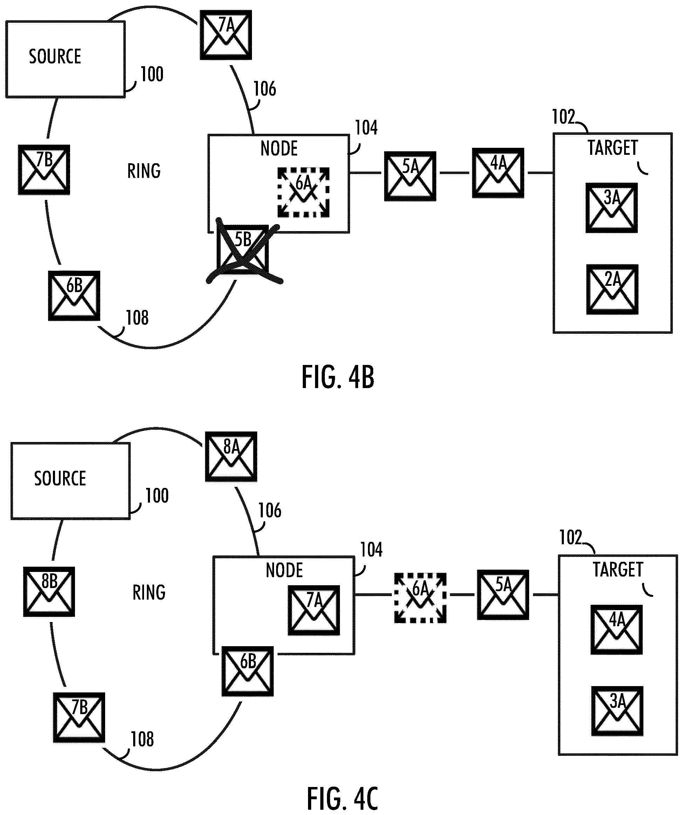

In Figure 4B the missing frame 6A did not arrive at node 104. The now missing frame 6A is presented in the figure with a dashed line to emphasize the gap in the stream the missing frame causes. From the longer path 108, frame 5B arrives at the node 104, but as a copy 5A of the frame has already received from the shorter path 106, node 104 is configured to delete it. The missing frame 6A causes longer than normal period the node 104 has no frames to forward towards the target device 102. If there were more lost frames in a row, the gap could be up to the difference of the latencies of the shorter and longer paths.

Figure 4C shows the gap caused by frame 6A progressing to the path between node 104 and target node 102. The frame 6B coming from the longer path 108 is not removed by the node 104 because it is now the first copy of frame 6 as frame 6A did not arrive at the node 104 via the shorter path.

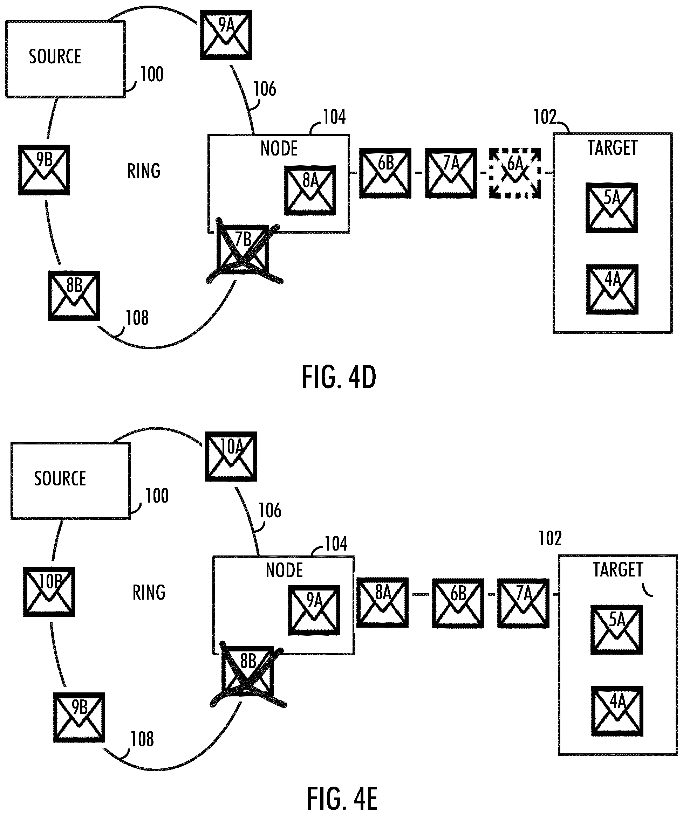

In Figure 4D the node 104 transmits both Frame 7A and 6B to the path towards target node 102. Frame 7A is sent first because it arrived at the node 104 before frame 6B. For a short period, the node 104 may transmit frames towards the target node 102 at higher than normal rate. This is because for a short period it received frames from both paths without deleting them (as duplicate frames). If there is enough link capacity, the data rate of the stream may be up to double for a while. If there is not enough capacity for the increased data rate, the transmit queue(s) at the node 104 fill up, which in the worst case may even cause frame loss if queue maximum length is reached.

Figure 4E shows the frames arriving at the target node 102 in a wrong order (7 before 6). This is not optimal, as the wrong order may confuse higher layer protocols. From the maximum latency point of view, it would have been also more optimal to send first the frame 6B which was received later than the frame 7A.

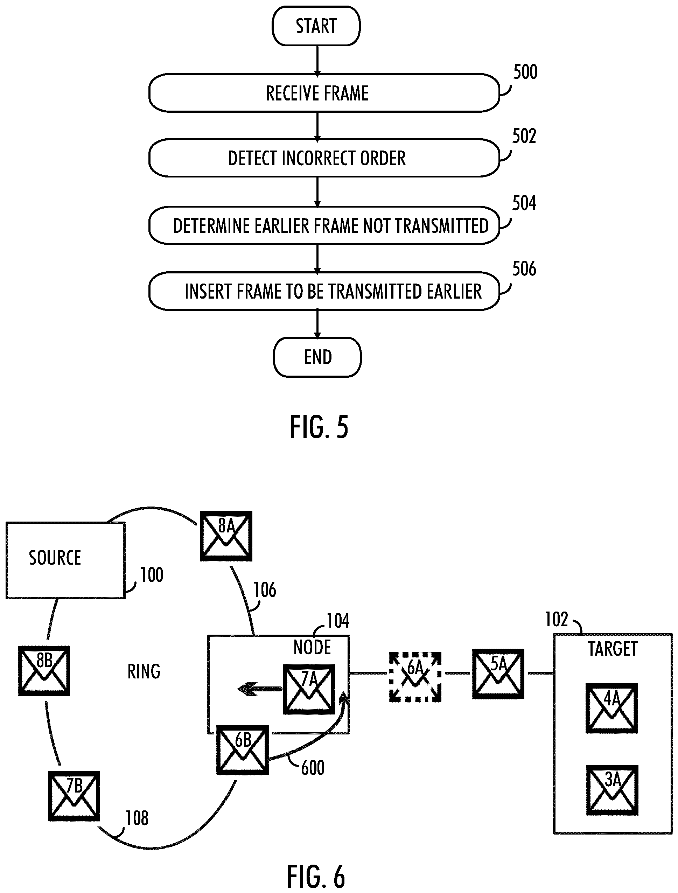

Figure 5 is a flowchart illustrating an embodiment. The figure illustrates a method for an apparatus configured to receive frames and relay the frames further. In an embodiment, the apparatus is a node 104.

In step 500, the apparatus is configured to receive frames of a stream from more than one route, each frame comprising a sequence number.

In step 502, the apparatus is configured to detect that a sequence number of received one or more frames is smaller than the sequence number of a frame receiver earlier.

In step 504, the apparatus is configured to determine that the frame that was received earlier with a greater sequence number is in a transmission queue maintained by the apparatus and not yet been relayed further.

In step 506, the apparatus is configured to insert the one or more frames in a transmission queue causing the relaying of the one or more frames before the relaying of the earlier frame that was received previously with a greater sequence number.

In an embodiment, the apparatus is configured to insert the one or more frames in front of the frame that was received previously with a greater sequence number in the same transmission queue.

In an embodiment, the apparatus is configured to insert the one or more frames in a transmission queue having a higher priority than the transmission queue with the frame that was received previously with a greater sequence number.

Figure 6 illustrates an example of returning the frames into correct order. Thus, Figure 6 presents a correcting alternative behaviour compared to Figure 4C, where frames were sent in an incorrect order (frame 7A prior frame 6B). The node 104 did not receive and forward frame 6A correctly (presented in the figure with a dashed line, illustrating the gap caused by the missing frame). In Figure 6 the node 104 is configured to recognize from the sequence numbers in the frames that frame 6B was transmitted earlier by the source node 100 than the frame 7A, which was received previously. The node 104 determines that the frame 7A is in a transmission queue maintained by the node and thus it has not yet been relayed further. As the node 104 did not yet transmit the frame 7A, it can insert frame 6B into a transmission queue to be sent before frame 7A, thus restoring the correct order.

As mentioned above, in an embodiment this can be made by inserting frame 6B in the same transmit queue as frame 7A but inserting 600 it before frame 7A so that it will be sent first.

As mentioned above, in an embodiment this can be made by inserting frame 6B in a higher priority transmit queue than frame 7A, so that frame 6B will be sent before frame 7A.

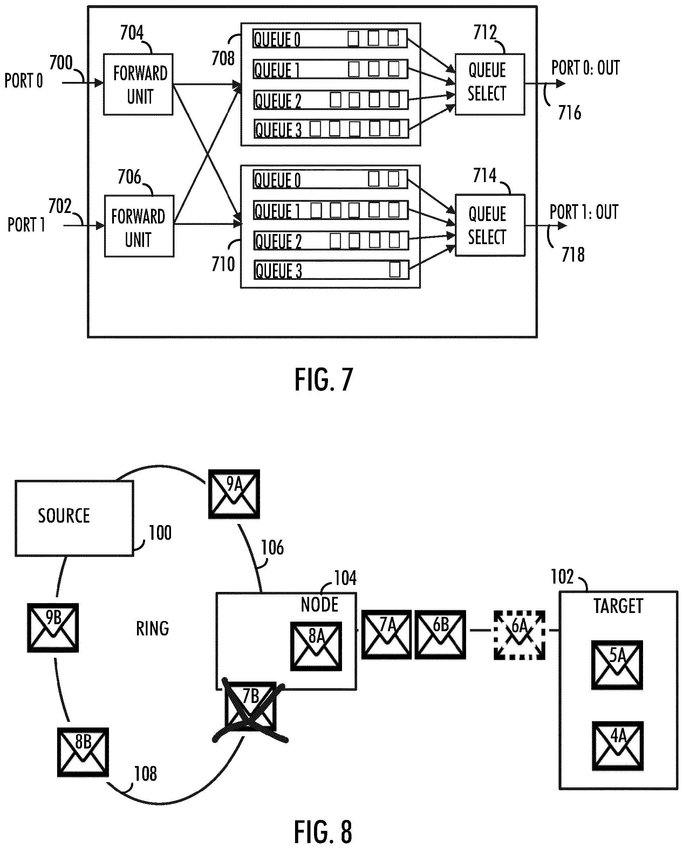

Figure 7 illustrates an example of transmission queues in a node, for example in node 104. The node comprises in this example two input ports 700, 702. The number of ports in a node may vary. Here only two ports are shown for simplicity. Frames arrive at ports and are processed in each port in a forwarding unit 704, 706, which forward the received frames to transmit queues 708, 710 of either port.

In the example of Figure 7, the node comprises two sets of transmit queues 708, 710, one for each port. Each set comprises four transmit queues. Frames from the transmit queues are selected by queue select units 712, 714 for transmission from outports 716, 718.

In an embodiment, the transmit queues may have different priority levels. Frames in queues having a higher priority are transmitted first before the frames in queues having a lower priority.

Assume here, for example, that queue 3 of set 710 has a higher priority than queue 1 of set 710. All frames in the higher priority queue are transmitted first and only when the higher priority queue is empty, are frames in the lower priority queue transmitted.

Figure 8 illustrates an example of the situation after the frames have been put in correct order as illustrated in Figure 6. The node 140 transmits both Frame 7A and 6B to the path towards the target node 102. As in the example of Figure 4D, for a short period the node sends frames towards the target node at higher than normal rate. If there is not enough link capacity for the increased data rate, the transmit queue(s) at the node 104 may fill up. The queues filling up helps the restoration of the original order (Figure 6) as frames wait longer in the node.

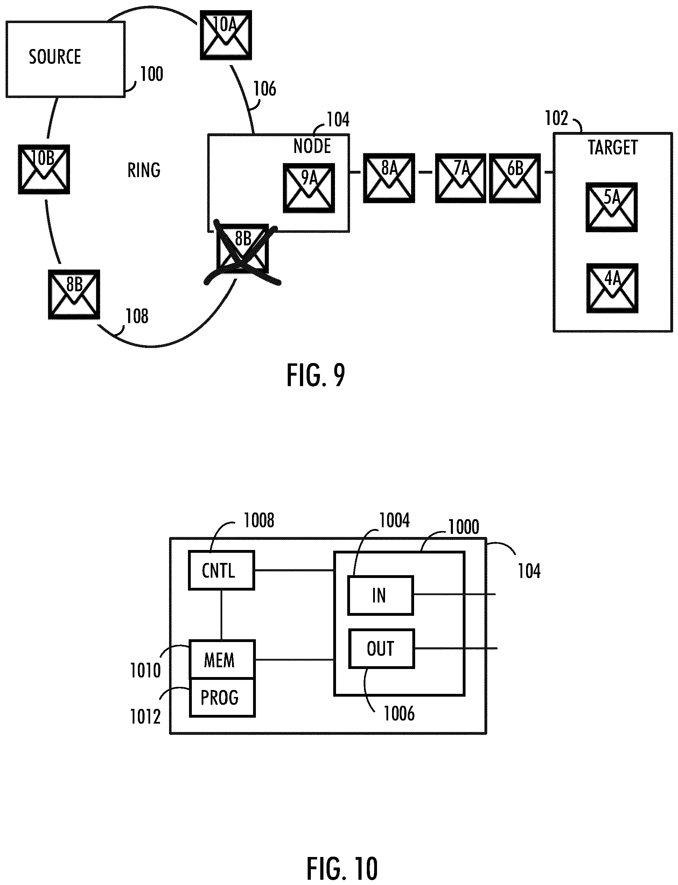

Figure 9 illustrates then the frames 7Aa and 6B arriving at the destination in the original order, compared to the wrong order in Figure 4E.

In some standards, such as in FRER, there is a counter counting frames that came in wrong order, but according to the standard the frames being late do not get any special treatment. Instead, the standard says that in-order delivery "is explicitly not a goal of FRER" as it would require buffering. In prior art, restoring the original order of the frames requires that the frame with bigger sequence number waits for the frame with smaller sequence number that arrives later. This would need buffering but increasing buffering would increase latency which should be avoided. However, in the proposed solution the incorrect order of frames can be recognised, and the reordering is done without adding any extra buffering.

In an embodiment, as described above, the frame with smaller sequence number is put into the same queue where the frame with bigger sequence number is already. It is placed in the queue before the frame with the bigger sequence number, so that it will be sent earlier. This requires functionality that allows adding frames into the middle of the queue, so the queue is not a basic First In First Out (FIFO) queue anymore.

In an embodiment, as described above, the frame with smaller sequence number is put into higher priority queue than the queue where the frame with bigger sequence number was put into. The frame with smaller sequence number should then be sent earlier than the frame with bigger sequence number, in order to restore the original frame order.

Additionally, in an embodiment it is possible to mark the frame so that it will be given higher priority also in the following nodes. The marking can be done for example by writing different value in the Priority Code Point (PCP) field of the Ethernet Frame Header of the frame in question.

It may be noted that both above cases are also beneficial for the maximum latency if the slower frame approaches the faster frame without necessarily overtaking it (thus restoring original order).

Figure 10 is a block diagram of an apparatus according to an embodiment. Although the apparatus has been depicted as one entity, different modules and memory may be implemented in one or more physical or logical entities. The apparatus may comprise a node supporting redundancy in communications. The node may be a network node in a communications network. The redundancy may be provided by redundancy in hardware components e.g. redundant ports, and/or redundancy in functionality, e.g. receiving and sending redundant frames. In redundant communications, the apparatus sends each frame redundantly. The redundancy may be provided by a number of connections used to send the frames, e.g. two or more separate connections. In one example this is achieved by the apparatus comprising a port corresponding to each connection. Having separate hardware, e.g. port for each redundant path provides sending redundant frames simultaneously, thereby without delays between frames sent on different paths. This is especially advantageous in real-time communications.

The apparatus 104 comprises an interfacing unit 1000, a controller CNTL or central processing unit (CPU) 1008, and a memory 1010, that are all being electrically interconnected. The interfacing unit comprises an input 1004 and an output unit 1006 that provide, respectively, the input and output interfaces of the apparatus. Accordingly, the output unit may be capable of transmitting frames and the input unit may be capable of receiving frames. The memory may comprise one or more applications 1012 that are executable by the CPU. The input and output units may be configured or arranged to send and receive data, frames, packets and/or messages according to one or more protocols. Examples of the protocols comprise communications layer protocols such as data link layer protocols including Medium Access Control (MAC) protocols defined by IEEE 802.3 Ethernet and IEEE 802.11 Wireless Local Area Network, WLAN, also known as the wireless Ethernet. Further examples are network layer protocols such as the Internet Protocol (IP) versions 4 and 6.

However, it should be appreciated that the protocols may include any other protocol on the data link layer, layer 2 or other layers in the OSI model that provides the functional and procedural means to transfer data between network entities. Therefore, various examples and embodiments described herein should be understood not to be limited to the data link layer address and MAC addresses, but they apply to various communications layer addresses used in various communications protocols, where a transmitter and received may be perform redundant communications.

In an embodiment, the apparatus may be connected or capable of being connected to one or more other nodes in a communications network or a region of the communications network, where nodes are uniquely identifiable on the basis of the communications layer protocol addresses of the nodes. Communications layer protocol IPv6 may be preferred over IPv4 since the address range of IPv6 is larger. In an example, the region of the communications network may comprise one or more single hop data link layer links, whereby the nodes may be uniquely identified on the basis of the data link layer addresses, e.g. MAC addresses. In an example, the region of the communications network may comprise a routing area for a specific range of IP addresses, for example a range of IPv4 addresses, whereby the nodes may be uniquely identified on the basis of the IP addresses in the routing area. The routing area may be connected to other regions of the communications network by a router connecting the regions.

Different parts of apparatus 104 may be combined into a single unit to provide the functionality of the parts. Accordingly, the input 1004 and output units 1006 may be combined into a single unit providing the reception and sending of information.

In an embodiment, the apparatus comprises two or more interfacing units, i.e. ports, through which frames can leave and/or enter the apparatus. The two or more ports are redundant such that the apparatus sends each frame of a stream via each of the ports. The frames are preferably sent simultaneously in order to avoid any delays between the frames, as delay is undesirable especially in real-time communications.

In an embodiment the apparatus may comprise two or more redundant ports and a non-redundant port, whereby frames from the non-redundant port are sent via the redundant ports and each frame from the redundant ports is sent only once through the non-redundant port.

In an embodiment the input 1004 unit may provide circuitry for obtaining data, frames, packets and/or messages to the apparatus. Accordingly, the input unit may serve for a receiver unit. The obtaining may comprise receiving radio frequency signals by an antenna, for example. In another example the obtaining by the input unit may comprise receiving an electrical signal on a wired connection.

In an embodiment the output unit 1006 may provide circuitry for transmitting data, frames, packets and/or messages from the apparatus. Accordingly, the output unit may serve for a transmitter unit. The transmitting may comprise transmitting radio frequency signals by an antenna, for example. In another example the transmitting may comprise transmitting an electrical signal on a wired connection.

In an embodiment, the apparatus may provide redundant communications by connecting to a communications network on a communications layer with a plurality of redundant ports. Accordingly, the apparatus may comprise two or more redundant ports implementing the same protocols or different protocols. The protocols may be communications layer protocols. Examples of the different protocols may comprise those explained above. When different data link layer protocols define different physical layer protocols, e.g. by the Ethernet defining a wired physical layer and the WLAN defining a wireless physical layer, the redundant ports implementing different data link layer protocols may further implement different physical layers. In this way the redundant paths are separated by the physical medium used for transferring the frames, e.g. a wireless medium and a wired medium in case WLAN and Ethernet are used.

In an embodiment, apparatus may comprise two or more redundant ports implementing Ethernet and two or more redundant ports implementing WLAN. In this way the apparatus may provide redundancy in communications in both wired and wireless networks. The apparatus may be further provided with a non-redundant port for communications between the two networks. In this way the apparatus may operate as QuadBox as illustrated as nodes 212, 214 in Figure 2, between a first ring 224 and a second ring 226. Accordingly, wired and wireless networks may be redundantly connected.

The steps/points, and related functions described above in Figures are in no absolute chronological order, and some of the steps/points may be performed simultaneously or in an order differing from the given one. Other functions can also be executed between the steps/points or within the steps/points and other signaling messages sent between the illustrated messages. Some of the steps/points or part of the steps/points can also be left out or replaced by a corresponding step/point or part of the step/point.

The apparatus 104 may be implemented as an electronic digital computer, which may comprise a working memory (RAM), a central processing unit (CPU), and a system clock. The CPU may comprise a set of registers, an arithmetic logic unit, and a control unit. The control unit is controlled by a sequence of program instructions transferred to the CPU from the RAM. The control unit may contain a number of microinstructions for basic operations. The implementation of microinstructions may vary, depending on the CPU design. The program instructions may be coded by a programming language, which may be a high-level programming language, such as C, Java, etc., or a low-level programming language, such as a machine language, or an assembler. The electronic digital computer may also have an operating system, which may provide system services to a computer program written with the program instructions. The memory may be a volatile or a non-volatile memory, for example EEPROM, ROM, PROM, RAM, DRAM, SRAM, firmware, programmable logic, etc.

An embodiment provides a computer program embodied on a non-transitory distribution medium, comprising program instructions which, when loaded into an electronic apparatus, constitute the interface 1002 providing one, two or more ports for redundant communications of frames.

The computer program may be in source code form, object code form, or in some intermediate form, and it may be stored in some sort of carrier, which may be any entity or device capable of carrying the program. Such carriers include a non-transitory computer readable storage medium, a record medium, computer memory, read-only memory, electrical carrier signal, telecommunications signal, and software distribution package, for example. Depending on the processing power needed, the computer program may be executed in a single electronic digital computer, or it may be distributed amongst a number of computers.

The apparatus 104 may also be implemented as one or more integrated circuits, such as application-specific integrated circuits ASIC, software routines and/or programmable circuits. Other hardware embodiments are also feasible, such as a circuit built of separate logic components. A hybrid of these different implementations is also feasible. When selecting the method of implementation, a person skilled in the art will consider the requirements set for the size and power consumption of the apparatus 104, necessary processing capacity, production costs, and production volumes, for example.

The present invention is applicable to network node and corresponding component, and/or to any communication system or any combination of different communication systems that support redundancy in communications. The communication system may be a fixed communication system or a wireless communication system or a communication system utilizing both fixed networks and wireless networks. The protocols used, the specifications of communication systems develop rapidly. Such development may require extra changes to an embodiment. Therefore, all words and expressions should be interpreted broadly and they are intended to illustrate, not to restrict, the embodiment.

The apparatus, such as a network node or a corresponding network node component may be configured as a computer or a microprocessor, such as single-chip computer element, including at least a memory for providing storage area used for arithmetic operation and an operation processor for executing the arithmetic operation. An example of the operation processor includes a central processing unit. The memory may be removable memory detachably connected to the apparatus.

For example, an apparatus according to an embodiment may be implemented in hardware (one or more apparatuses), firmware (one or more apparatuses), software (one or more modules), or combinations thereof. For a firmware or software, implementation can be through modules (e.g., procedures, functions, and so on) that perform the functions described herein. The software codes may be stored in any suitable, processor/computer-readable data storage medium(s) or memory unit(s) or article(s) of manufacture and executed by one or more processors/computers. The data storage medium or the memory unit may be implemented within the processor/computer or external to the processor/computer, in which case it can be communicatively coupled to the processor/computer via various means as is known in the art.

It will be obvious to a person skilled in the art that, as the technology advances, the inventive concept can be implemented in various ways. The invention and its embodiments are not limited to the examples described above but may vary within the scope of the claims.

## Claims

1. An apparatus configured to receive frames and relay the frames further, the apparatus comprising:
means (1000, 1008, 1010, 1012) for receiving frames of a stream from more than one route, each frame comprising a sequence number;
means (1000, 1008, 1010, 1012) for detecting that a sequence number of received one or more frames is smaller than the sequence number of a frame receiver earlier;
means (1000, 1008, 1010, 1012) for determining that the frame that was received earlier with a greater sequence number is in a transmission queue maintained by the apparatus and not yet been relayed further;
means (1000, 1008, 1010, 1012) for inserting the one or more frames in a transmission queue causing the relaying of the one or more frames before the relaying of the earlier frame that was received previously with a greater sequence number.

2. The apparatus according to claim 1, further comprising
means for placing the one or more frames in front of the frame that was received earlier with a greater sequence number in the same transmission queue.

3. The apparatus according to claim 1, further comprising
means placing the one or more frames in a transmission queue having a higher priority than the transmission queue with the frame that was received earlier with a bigger sequence number.

4. The apparatus according to claim 1, further comprising
marking the one or more frames a higher priority than the frame that was received earlier with a greater sequence number.

5. The apparatus according to claim 4, further comprising means for writing a higher priority value to Priority Code Point Value field of Ethernet Frame Header.

6. The apparatus of any preceding claim, wherein the apparatus operates according to one or more of redundancy protocols.

7. The apparatus of claim 6, wherein the sequence number is a redundancy protocol sequence number.

8. The apparatus of claim 6, wherein one or more of redundancy protocols comprise at least one of Parallel Redundancy Protocol and High-Availability Seamless Redundancy protocol.

9. The apparatus of any preceding claim, comprising:
a receiver unit capable of receiving frames;
a memory;
a processing unit operatively connected to the receiver unit and the memory.

10. A method for an apparatus configured to receive frames and relay the frames further, the method comprising:
receiving (500) frames of a stream from more than one route, each frame comprising a sequence number;
detecting (502) that a sequence number of received one or more frames is smaller than the sequence number of a frame receiver earlier;
determining (504) that the frame that was received earlier with a greater sequence number is in a transmission queue maintained by the apparatus and not yet been relayed further;
inserting (506) the one or more frames in a transmission queue causing the relaying of the one or more frames before the relaying of the earlier frame that was received previously with a greater sequence number.

11. A method according to claim 10, further comprising
placing the one or more frames in front of the frame that was received earlier with a greater sequence number in the same transmission queue.

12. A method according to claim 10 further comprising
placing the one or more frames in a transmission queue having a higher priority than the transmission queue with the frame that was received earlier with a greater sequence number.

13. The method according to claim 10, further comprising writing a higher priority value to Priority Code Point Value field of Ethernet Frame Header.

14. The method of any preceding claim 10 to 13, wherein the sequence number is a redundancy protocol sequence number.

15. A computer program comprising instructions for causing an apparatus to perform a method according to any preceding claim 10 to 14.
